# EUROPEAN PATENT APPLICATION

(11) **EP 2 292 506 A1**
(43) Date of publication of application: **09.03.2011**
(21) Application number: 09169209.5
(22) Date of filing: 02.09.2009
(51) Int. Cl.: B62M 3/08

(54) **Bicycle clipless pedal with clamping force adjusting assembly**

(71) Applicant: VP Components Co., Ltd., Taiwan (TW)
(72) Inventor: Lin, Wen-Hwa, Taichung Hsien (TW)
(74) Representative: Viering, Jentschura & Partner

(57) **Abstract**

A bicycle clipless pedal with a clamping force adjusting assembly (50) is disclosed. The clamping force adjusting assembly (50) allows a user to manually change a preload of a compression spring (53) in the pedal so as to adjust a clamping force provided by a rear clamping set (30) of the bicycle clipless pedal to a shoe cleat (60).

## Description

### BACKGROUND OF THE INVENTION

### 1. Technical Field

The present invention relates to a bicycle clipless pedal according to the preamble of Claim 1. Accordingly, the present invention particularly relates to a bicycle clipless pedal equipped with a clamping force adjusting assembly so that the clipless pedal is capable of providing an adjustable clamping force to an external shoe cleat.

### 2. Description of Related Art

A bicycle clipless pedal is designed to removably engage with a cleat of a cleated shoe for fastening a cyclist's foot to the pedal. As compared with the traditional pedals without a cleat retaining structure, the clipless pedals help the cyclist to pedal with less effort, to maintain rotational acceleration of the pedal, and to prevent the his/her feet from coming off from the pedals during his/her riding. For the aforementioned advantages, the clipless pedals have been extensively used in cross country bikes, mountain bikes, and racing bikes.

A known design of a bicycle clipless pedal, as disclosed in 6,708,584, is a pedal assembly that has a center tubular portion **30,** a bicycle pedal **12** rotating around the center tubular portion 30, a front and rear clamping members **24** and **26** fixedly coupled to a first and second ends of the bicycle pedal **12,** respectively. The '584 Patent also disclosed a cleat **14** for being coupled with the pedal assembly. The cleat **14** has a set of front coupling members **86, 88,** and a set of rear coupling members **90, 92,** for engaging the front and rear clamping members **24** and **26,** respectively. A support pin **28** is coupled to the rear end of the bicycle pedal **12** and a set of torsion springs **29** are mounted on the support pin **28.** Therein, one end of the spring **29** is connected with the rear clamping member **26.**

The pedal assembly provided by the '584 Patent indeed provides due clamping performance at the initial stage of use because at that time the regular springiness of the torsion springs **29** ensures the firm combination between the rear clamping member **26** and the rear coupling members **90, 92.** However, with the lapse of use time, fatigue failure happening to the torsion springs **29** can adversely affect the desired combination between the shoe cleat **14** and the pedal **12.** As a result, the cleat **14** is likely to come off when the cyclist pedals, risking the cyclist getting muscle strains. Therefore, the '584 Patent lacks for a technical approach recovering the desired clamping force the pedal **12** applies to the shoe cleat **14** as a solution to fatigue failure of the torsion springs **29.**

### SUMMARY OF THE INVENTION

Hence, the present invention is herein disclosed to provide a bicycle clipless pedal with a clamping force adjusting assembly that solves the problem of the prior art and provides an effective adjusting means to recover the clamping performance of the clipless pedal from a weaken state thereof.

The primary objective of the present invention is to provide a bicycle clipless pedal with a clamping force adjusting assembly, by which adjusting assembly, a user is allowed to adjust a clamping force exerted by a rear clamping set of the pedal.

Another objective of the present invention is to provide a bicycle clipless pedal with a clamping force adjusting assembly, wherein the clamping force adjusting assembly can be easily operated by using a screwdriver to screw or unscrew an adjusting screw so as to adjust a clamping force of the pedal.

To achieve theses and other objectives, the present invention provides a bicycle clipless pedal with a clamping force adjusting assembly according to claim 1. Further embodiments of the invention are described in the dependent claims.

### BRIEF DESCRIPTION OF THE DRAWINGS

The invention as well as a preferred mode of use, further objectives and advantages thereof will be best understood by reference to the following detailed description of an illustrative embodiment when read in conjunction with the accompanying drawing, wherein:
**Figure 1** is a front oblique view of a bicycle clipless pedal with a clamping force adjusting assembly of the present invention;
**Figure 2** is a rear oblique view of the bicycle clipless pedal of the present invention;
**Figure 3** is an exploded view of the bicycle clipless pedal taken from the same viewpoint of **Figure 2****;**
**Figure 4** is a sectional assembled view of the bicycle clipless pedal of the present invention;
**Figure 5** shows adjustment of the clamping force adjusting assembly of the bicycle clipless pedal; and
**Figures 6** through **8** illustrate combination between a shoe cleat and the bicycle clipless pedal of the present invention.

### DETAILED DESCRIPTION OF THE PREFERRED EMBODIMENT

While a preferred embodiment provided hereinafter for illustrating the concept of the present invention as described above, it is to be understood that the components of the embodiment shown in the accompanying drawings are depicted for the sake of easy explanation and need not to be made in scale.

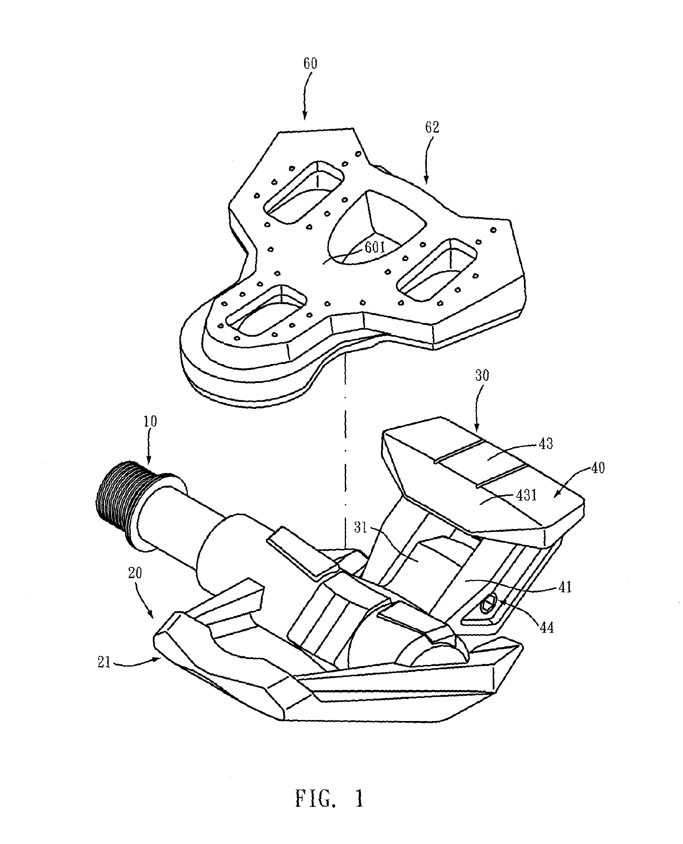

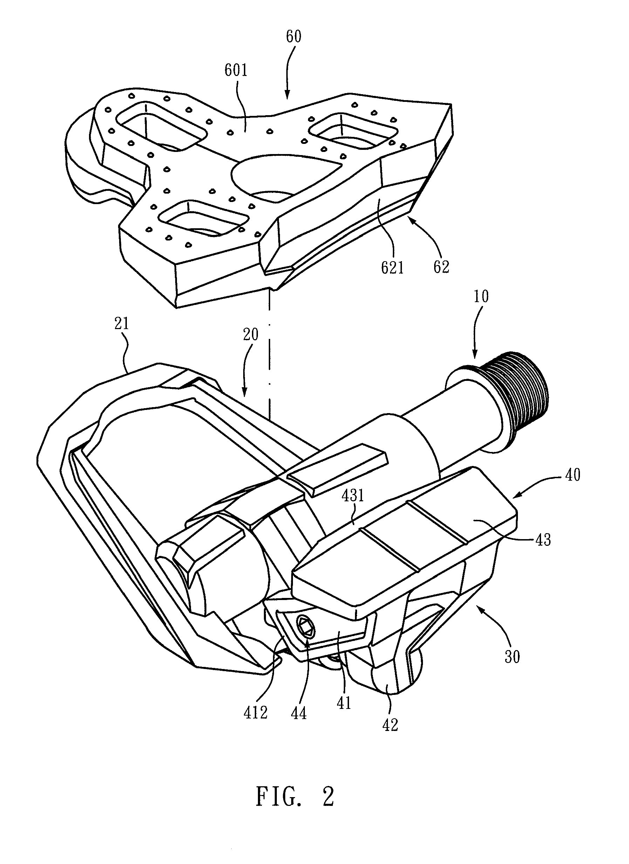

Please refer to **Figures 1** and **2** for a bicycle clipless pedal with a clamping force adjusting assembly of the present invention. The clipless pedal has a pedal axle **10** coupled with a crank arm (not shown) of a bicycle, a pedal body **20** coupled to and rotating around the pedal axle **10,** a front coupling portion **21** provided at a front end of the pedal body **20,** and a rear clamping set **30** connected to a rear end of the pedal body **20.**

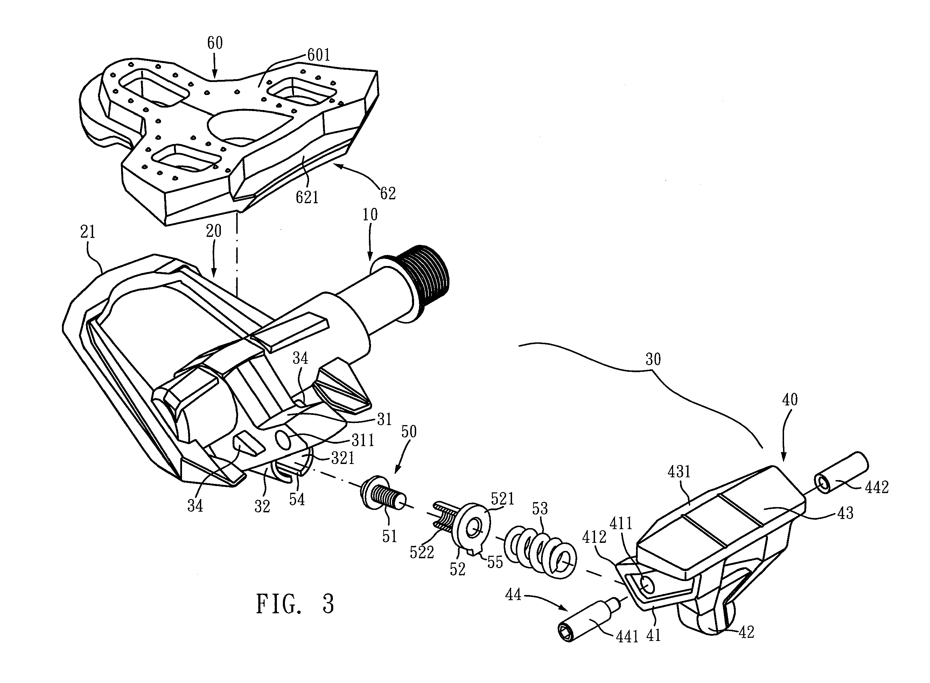

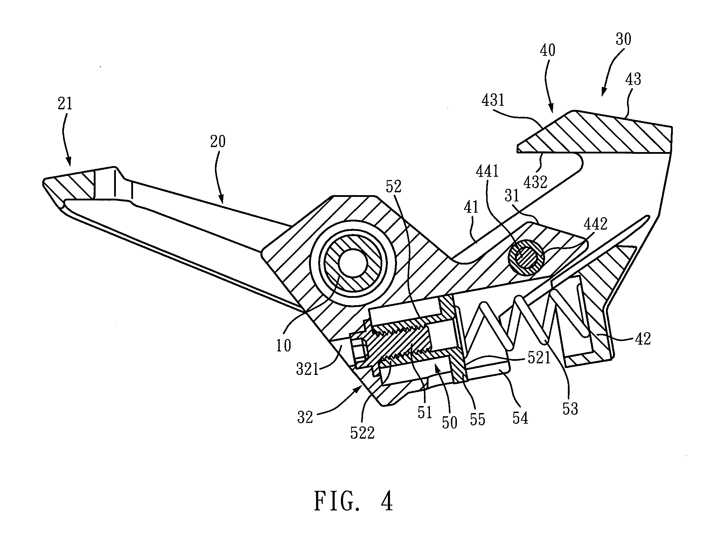

As shown in **Figures 3** and **4****,** the rear clamping set **30** includes an assembling portion **31,** a fastening member **40,** a compression spring **53,** and the clamping force adjusting assembly **50.**

The assembling portion **31** is connected to the rear end of the pedal body **20.** A tubular structure **32** is provided at a bottom of the assembling portion **31** and two retaining blocks **34** flank the assembling portion **31.**

The fastening member **40** includes a pivot portion **41,** a spring-stop portion **42** connected to a lower edge of the pivot portion **41** and corresponding to an end of the tubular structure **32,** and a coupling board **43** connected from above to the pivot portion **41.** The pivot portion **41** is formed with a transversely extending through hole **411** for allowing a pin **44** of the assembling portion **31** to pass therethrough, so as to connect the pivot portion **41** with the assembling portion **31** while the fastening member **40** is allowed to change its position angularly around the pin **44.** The pivot portion **41** has an open end **412** contacting upper surfaces of the retaining blocks **34.** In the present embodiment, the pin **44** includes a first pin part **441** and a second pin part **442** that are axially combined in a tight fit inside a pin hole **311** of the assembling portion **31.** Outer ends of the first pin part **441** and the second pin part **442** are received in the through hole **411** of the fastening member **40** so that the fastening member **40** can rotate around the first pin part **441** and the second pin part **442.**

The compression spring **53** is settled in the tubular structure **32** and abuts against the spring-stop portion **42** of the fastening member **40.**

The clamping force adjusting assembly **50** includes an adjusting screw **51** and an adjusting socket **52.** The adjusting socket **52** is settled in the tubular structure **32.** A slot **54** and a retaining protuberance **55** are formed on the tubular structure **32** and the adjusting socket **52** positionally corresponding to each other to be coupled mutually for preventing relative rotation between the adjusting socket **52** and the tubular structure **32.** The adjusting socket **52** has a first end formed as a spring-stop portion **521.** Thereby, two ends of the compression spring **53** abut against the two spring-stop portions **42, 521** respectively. A second end of the adjusting socket **52** is provided with a threaded hole **522** so that the adjusting screw **51** coming through a through hole **321** formed at one end of the tubular structure **32** can get screwedly coupled with the threaded hole **522.**

Thereby, a user can reach a head of the adjusting screw **51** with a screwdriver or the like through the through hole **321** of the tubular structure **32,** and then adjust the adjusting screw **51.** Since the adjusting socket **52** is rotationally restricted in the tubular structure **32,** according to the arrangement of the threads on the adjusting screw **51** and in the threaded hole **522,** when the adjusting screw **51** is rotated in one direction, the adjusting socket **52** is driven to move toward the compression spring **53,** and, on the contrary, when the adjusting screw **51** is rotated in the other direction, the adjusting socket **52** is driven to move away from the compression spring **53.** Thus, rotation of the adjusting screw **51** makes the adjusting socket **52** move linearly in the tubular structure **32** and compress or release the compression spring **53,** thereby changing a preload of the compression spring **53.**

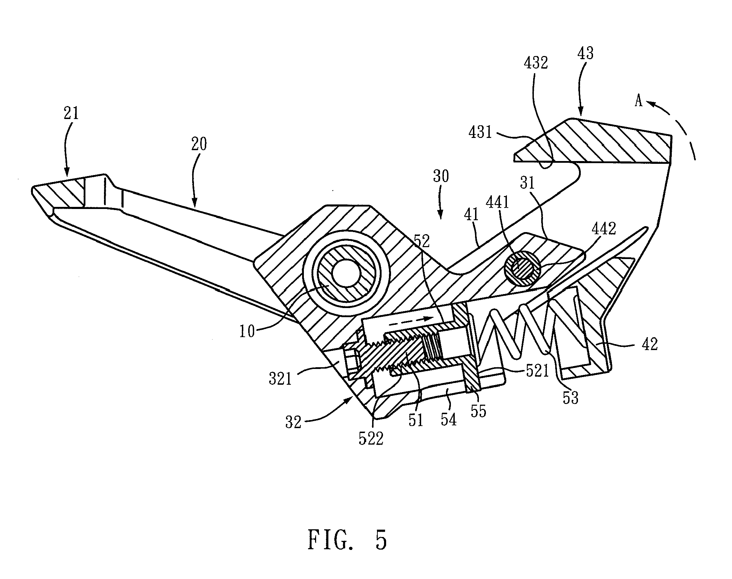

Referring to **Figures 4** and **5****,** the above adjustment controlled by rotation of the adjusting screw **51** is illustrated by means of some sectional assembled views of the pedal. Rotation of the adjusting screw **51** makes the adjusting socket **52** move inside the tubular structure **32** toward the compression spring **53.** At this time, the compression spring **53** is compressed between the two spring-stop portions **521, 42.** As a result, the elastic preload of the compression spring **53** increases, meaning spring-stop portion **42** of the fastening member **40** receives an increased pushing force. The fastening member **40** thus swings around the pin **44** along a direction as indicated by the arrow A, so that the fastening member **40** provides an enhanced clamping force to a rear coupling portion **62** (as shown in **Figures 1** through **3****)** of a shoe cleat **60** coupled with the pedal body **20.** On the contrary, when the adjusting socket **52** moves away from the compression spring **53,** the preload of the compression spring **53** decreases; thereby releasing the clamping force provided by the fastening member **40** to the rear coupling portion **62.**

Referring back to **Figures 1** through **3****,** the rear coupling portion **62** of the shoe cleat **60** has a horizontal coupling surface **621** depressed from an upper surface **601** of the shoe cleat **60.** The coupling board **43** has its upper surface formed with a downward inclined surface **431** and has its lower surface formed as a horizontal coupling surface **432.** When the shoe cleat **60** is coupled with the pedal body **20,** the horizontal coupling surface **432** of the coupling board **43** and the horizontal coupling surface **621** of the shoe cleat **60** retain mutually.

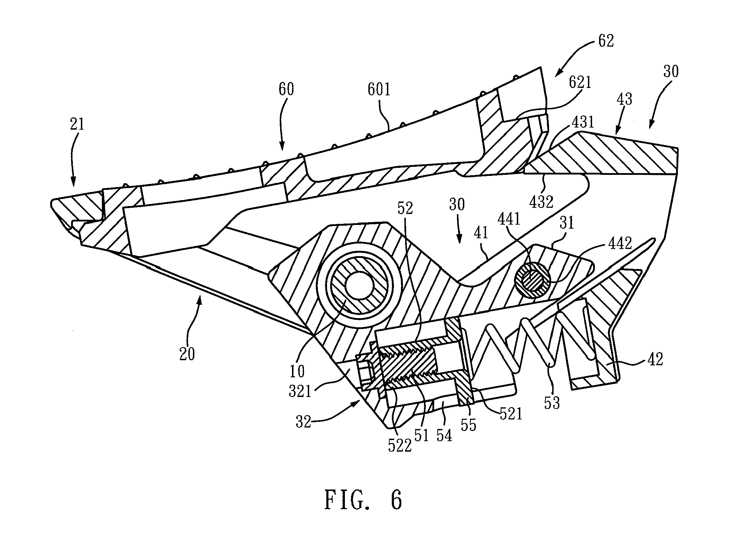

The combination between the shoe cleat **60** and the disclosed clipless pedal is explained below with reference to **Figures 6****,** 7, and 8.

As shown in **Figure 6****,** the shoe cleat **60** has its front end downward reaching a lower surface of the front coupling portion **21.**

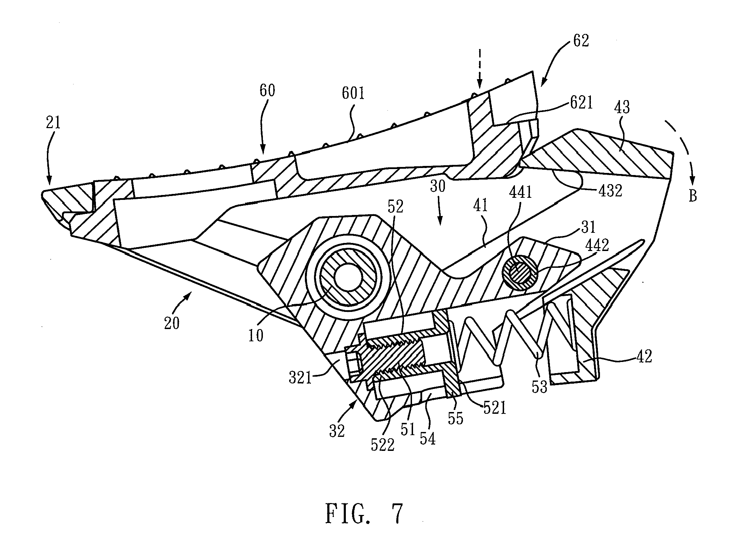

Referring to **Figure 7****,** the rear coupling portion **62** exerts a downward force to the downward inclined surface **431** of the coupling board **43** so that the fastening member **40** swings around the pin **44** in a direction indicated by arrow B and has its spring-stop portion **42** compressing the compression spring **53,** causing the rear coupling portion **62** to pass by the coupling board **43.**

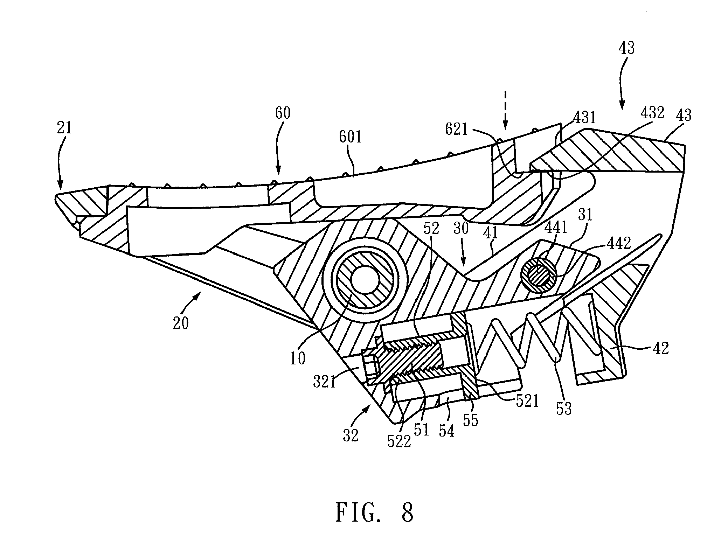

As shown in **Figure 8****,** the shoe cleat **60** is now coupled with the pedal body **20,** and the compression spring **53** restores to abut against the spring-stop portion **42** again, while the horizontal coupling surface **432** of the coupling board **43** and the horizontal coupling surface **621** of the shoe cleat **60** retain mutually.

From the above description, it is learned that the elastic preload of the compression spring **53** determines the clamping force of the coupling board **43** applying to the rear coupling portion **62.** When the compression spring **53,** after a long period of use, suffers from fatigue failure that weakens the clamping force of the pedal, the clamping force adjusting assembly **50** can be operated to increase the preload of the compression spring **53** so as to recover the due clamping performance of the coupling board **43** providing to the rear coupling portion **62.** The elastic preload of the compression spring **53** can be easily adjusted by rotating the adjusting screw **51** in the clamping force adjusting assembly **50** with a screwdriver. Therefore, the clamping force adjusting assembly **50** is easy to operate on a user's own, and allows the user to freely adjust the clamping performance according to his preference.

However, it is to be noted that the best clamping performance relies on the most appropriate clamping force but not the greatest one. The relative contact between the retaining blocks **34** and the open end **412** of the pivot portion **41** prevents the fastening member **40** from excessively swinging toward the shoe cleat **60** and excessively pressing the rear coupling portion **62.** Such design, in view of safety, helps to prevent undue engagement between the shoe cleat **60** and the pedal body **20** that obstructs later disassembly.

The present invention has been described with reference to the preferred embodiment and it is understood that the embodiment is not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A bicycle clipless pedal with a clamping force adjusting assembly, the clipless pedal comprising a pedal axle (10), a pedal body (20) coupled to and rotating around the pedal axle (10), and a rear clamping set (30) connected to a rear end of the pedal body (20), the bicycle clipless pedal being **characterized in that** the rear clamping set (30) includes:
an assembling portion (31) connected to the pedal body (20);
a fastening member (40) pivotally connected to the assembling portion (31);
a compression spring (53) settled in the assembling portion (31) for providing an elastic pushing force to the fastening member (40); and
the clamping force adjusting assembly (50) deposited at the assembling portion (31) for adjusting a preload of the compression spring (53).

2. The bicycle clipless pedal with the clamping force adjusting assembly of Claim 1, wherein the fastening member (40) comprises:
a pivot portion (41), having a transversely extending through hole (411) for allowing a pin (44) coupled to the assembling portion (31) to pass therethrough;
a spring-stop portion (42) connected to a lower edge of the pivot portion (41); and
a coupling board (43) connected from above to the pivot portion (41).

3. The bicycle clipless pedal with the clamping force adjusting assembly of Claim 2, wherein a tubular structure (32) provided at a bottom of the assembling portion (31) has one end corresponding to a spring-stop portion (42) of the pivot portion (41), and the compression spring (53) has one end distant from the spring-stop portion (42) piercing into the tubular structure (32).

4. The bicycle clipless pedal with the clamping force adjusting assembly of Claim 3, wherein the clamping force adjusting assembly (50) includes an adjusting screw (51) and an adjusting socket (52), the adjusting socket (52) being linearly movable in the tubular structure (32), the adjusting socket (52) having a first end formed as a spring-stop portion (521) abutted by the compression spring (53) and a second end provided with a threaded hole (522), and the adjusting screw (51) coming through a through hole (321) formed at one end of the tubular structure (32) getting screwedly coupled with the threaded hole (522).

5. The bicycle clipless pedal with the clamping force adjusting assembly of Claim 4, wherein a slot (54) and a retaining protuberance (55) are formed at corresponding positions on a wall of the tubular structure (32) and the adjusting socket (52), respectively, for being coupled mutually.

6. The bicycle clipless pedal with the clamping force adjusting assembly of Claim 2, wherein two retaining blocks (34) flank the assembling portion (31), and an open end (412) of the pivot portion (41) contacts upper surfaces of the retaining blocks (34).

7. The bicycle clipless pedal with the clamping force adjusting assembly of Claim 2, wherein the pin (44) includes a first pin part (441) and a second pin part (442) that are axially combined in a tight fit inside a pin hole (311) of the assembling portion (31), while outer ends of the first pin part (441) and the second pin part (442) are received in the through hole (411) of the fastening member (40).
